# EUROPEAN PATENT SPECIFICATION

(11) **EP 0 736 722 B1**
(45) Date of publication and mention of the grant of the patent: **27.01.1999**
(21) Application number: 96302391.6
(22) Date of filing: 03.04.1996
(51) Int. Cl.: F16L 55/46, B08B 9/04, G01M 3/00, F16L 55/26, F16L 55/30

(54) **Apparatus and method for introducing into and removing from a pipe a device which is advanced and retracted by a cable**
Vorrichtung und Verfahren zum Einlegen und Entnehmen einer Einrichtung in bzw. aus einem Rohr, wobei die Einrichtung mittels eines Kabels vor- bzw. zurückbewegt wird
Dispositif et méthode d'introduction dans une canalisation et d'enlèvement d'un objet avancé et retiré par un câble

(30) Priority: 04.04.1995 GB 9506950
(43) Date of publication of application: 09.10.1996
(73) Proprietor: BG plc, Reading, Berkshire RG6 1PT (GB)
(72) Inventor: Cotton, Michael, Castleford, West Yorkshire WE10 4QL (GB); Horan, Kevin Michael, Rodley, Leeds, LS13 1JD (GB)
(74) Representative: Morgan, David James

(56) References cited:
- EP-A- 0 294 243
- EP-A- 0 426 871
- EP-A- 0 450 814
- EP-A- 0 701 084
- GB-A- 2 198 208
- GB-A- 2 247 504
- US-A- 5 025 670

## Description

The present invention relates to apparatus and method for introducing into and removing from a pipe a device which is advanced and retracted by a cable.

Such devices as closed circuit television cameras and sprayers are introduced into gas and other utility pipes respectively to inspect the walls of the pipes and spray them with a protective coating. The devices are attached to cables which are used to advance or push the devices along and retract or pull the devices from the pipes as well as carrying picture information in the case of TV cameras or sealants in the case of the sprayer devices.

The devices gain access internally to the pipe by way of a hole bored in the wall of the pipe.

In the case of a gas pipe, both the hole boring and the introduction and removal of the device are done in such a way that gas does not escape from the pipe.

To this end a plate valve is first fitted to the pipe wall and the hole is bored with a drill via a gland mounted on the valve so that when the valve is opened and drilling takes place, the gland forms a seal with the body of the drill to prevent the escape of gas. The valve is then closed and the drill and gland removed.

Next the cable is threaded into a device/cable insertion tube well known in the art and through which, in use, the device is inserted into the pipe and into which, after use, the device is retracted. The cable forms a gas tight seal with an annular plug located at a far end of the tube. In preparation for insertion into the pipe, the cable is attached to the device and the cable is pulled back to pull the device into the tube which is clear of the plate valve. The near end of the tube is now mounted in a gas tight manner on the plate valve. The tube therefore enables insertion into and removal from the pipe to be performed with no escape of gas.

Now the plate valve is opened to permit the device to be pushed by the cable through the hole in the pipe wall into and along the pipe bore to carry out the inspection or spray coating as the case may be.

After the particular task has been performed the cable is then pulled back through the plug to pull the device back along the pipe, through the hole, past the open plate valve and thence into the insertion tube when the tube can be removed from the plate valve which is closed.

Unfortunately a problem occurs with the conventional equipment as described above in that on retraction the device gets caught on the wall of the pipe surrounding the hole and sometimes cannot be pulled through the hole.

US -A- 5025670 shows a configuration with two angled tubes for a camera, the tube selected being dependent on the direction of travel required. A guide bar assists with handling the cable.

The present invention is concerned with providing an improved arrangement.

According to the invention there is provided apparatus for introducing into and removing from a pipe a device which is advanced and retracted by a cable, the apparatus comprising an insertion tube having an end for mounting above a hole bored in the pipe wall, a second tube attached to the wall of the insertion tube and a rod with an end which is insertable through the second tube into the pipe bore, the rod end having means to engage the cable as it is retracting the device to hold the cable away from the sides of the hole, characterised in that the insertion tube is vertically mounted, and the second tube is an auxiliary tube mounted entirely on the wall of the insertion tube to provide access to the pipe via the insertion tube, the axis of the auxiliary tube being in line, in use, with the hole in the pipe wall.

Other preferred embodiments are specified in dependent claims 2-5.

An embodiment of the invention will now be particularly described with reference to the drawings in which:-
Figure 1 is a side view of an insertion and auxiliary tube in position mounted on the wall of a gas main,
Figure 2 shows the position as the device is being retracted and the cable is being held away from the walls of the hole by the rod, and
Figure 3 shows a close-up view of the end of the rod engaging the cable during retraction of the cable.

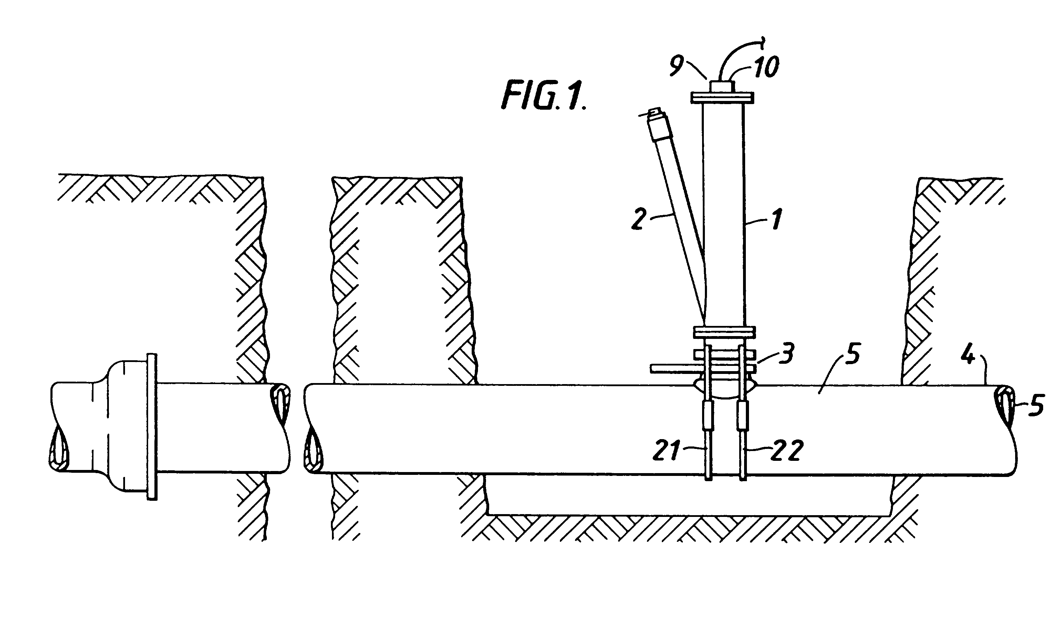

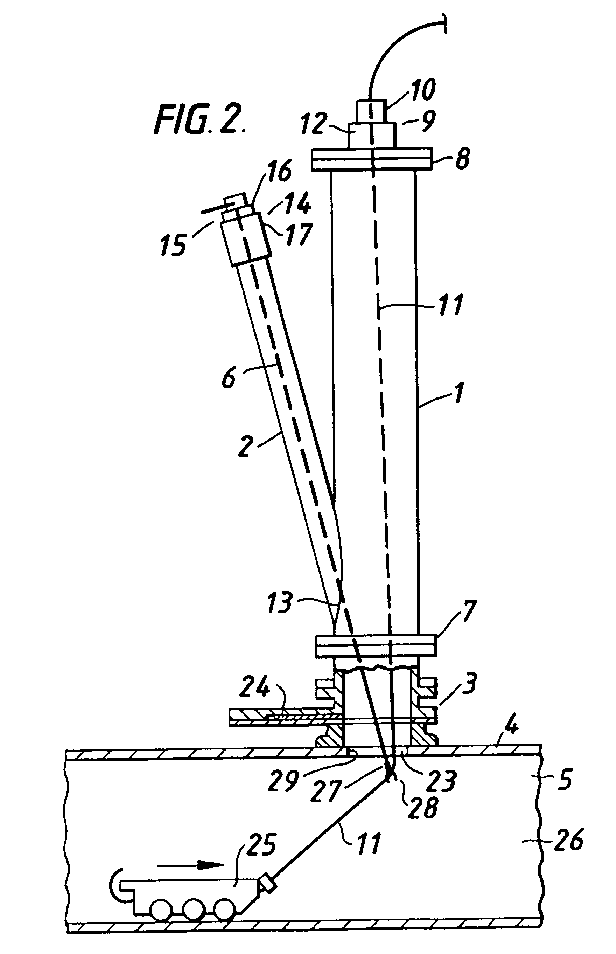

Referring to Figures 1 and 2 the apparatus comprises a known-type so-called insertion tube 1, an auxiliary tube 2 attached by welding to the wall of the insertion tube 1, a known-type plate valve 3 for mounting on the wall 4 of the pipe 5 and a rod 6 (Figure 2) for insertion into the auxiliary tube 2.

The insertion tube 1 is of conventional design and as it has already been described in some detail in the introduction will not be described in great detail here. The tube 1 is used to enable devices such as close circuit television cameras, pipe wall spray devices and inflatable stopper bags to be introduced into gas pipes in particular in such a way that gas does not escape into the atmosphere during such operations.

The tube 1 is flanged at either of its ends 7 and 8 for connection to corresponding flanges of the plate valve 3 in the case of end 7 and of a cable sealing plug assembly 9 in the case of end 8. The assembly 9 houses an annular rubber plug 10 which has a central aperture (not shown) through which, in use, the cable 11 can pass as shown in Figure 2. The aperture is small enough to form a gas tight seal with the cable 11, the plug 10 itself being located in a housing 12 in the assembly 9 with which housing 12 the plug 10 also forms a gas tight seal.

The auxiliary tube 2 which is of smaller external and internal diameter than the insertion tube 1, extends outwardly at an acute angle from the axis of the insertion tube 1 and is welded to the external wall of the insertion tube 1. The auxiliary tube 2 opens at its lowermost end 13 connected to insertion tube 1 into the bore of the insertion tube 1 as shown in Figure 2. Mounted at the other uppermost end 14 of the auxiliary tube 2 is a rod sealing plug assembly 15. The assembly 15 comprises an annular rubber plug 16 similar to plug 10, plug 16 also having a central aperture (not shown) through which, in use, the rod 6 can pass as shown in Figure 2, the aperture in the plug 16 being small enough to form a gas tight seal with the rod 6. The plug 16 is retained in a housing 17 in the assembly 15 with which housing 17 the plug 16 also forms a gas tight seal.

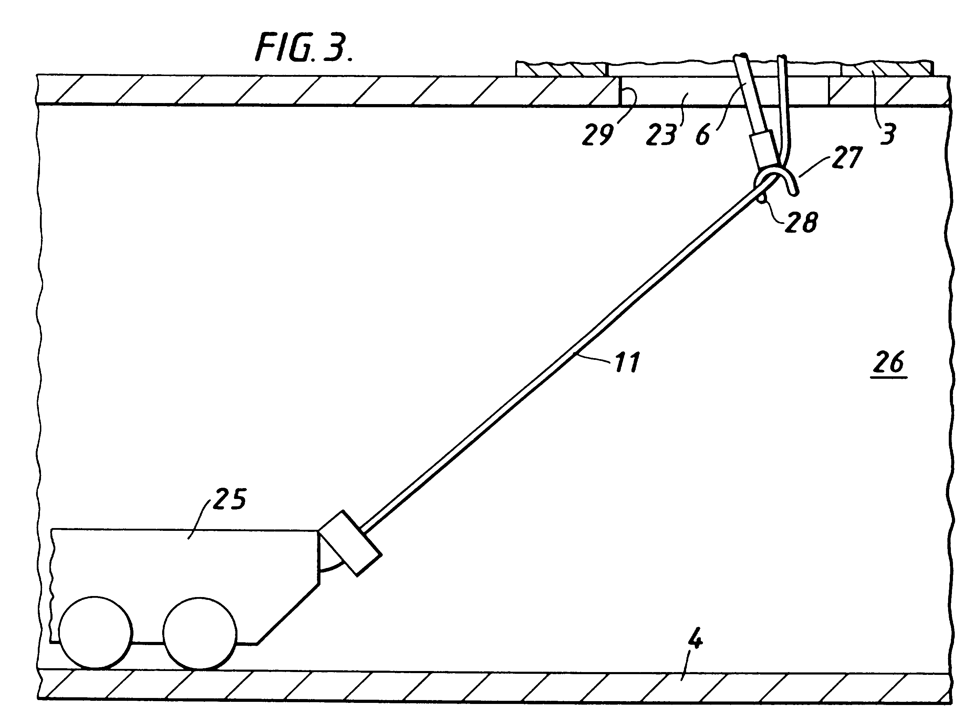

The plate valve 3 is mounted on the wall 3 of a gas pipe or main 5 by means of a pair of pipe straps 21 and 22 as conventional. In the situation shown in Figures 2 and 3, a hole 23 has already been drilled in the pipe wall 4, the plate 24 in the valve 3 opened and the device in this case a motor driven wheeled inspection camera 25 has been inserted into the pipe bore 26 via the insertion tube 1.

In Figure 2 the camera 25 is being retracted by the cable 11 and it is now desired to lift the camera 25 through the hole 23 and thence through the plate valve 3 and into the insertion tube 1.

It will be seen from Figure 2 that the axis of the auxiliary tube 2 is arranged so that it is, in use, in line with the hole 23 in the pipe wall 4. This enables the end 27 of the rod 6 to be pushed through the auxiliary tube 2 into the pipe bore 26 by way of the hole 23 and engage the cable 11 as shown in Figures 2 and 3.

The end 27 of the rod 6 has means in the form of U-shaped clip 28 shown inverted for holding and retaining the cable 11 so that the rod 6 can, in use, hold the cable 11 away from the sides of the hole 23 until on further retraction the camera 25 is pulled up into alignment with the hole 23 but spaced from the walls 29 thereof. Thereafter the rod 6 is removed from the auxiliary tube 2, the camera 25 can be pulled up into the insertion tube 1 and the plate 24 in the plate valve 3 closed.

## Claims

1. Apparatus for introducing into and removing from a pipe a device (25) which is advanced and retracted by a cable (11), the apparatus comprising an insertion tube (1) having an end for mounting above a hole (23) bored in the pipe wall, a second tube (2) attached to the wall of the insertion tube and a rod (6) with an end which is insertable through the second tube into the pipe bore, the rod end having means (28) to engage the cable as it is retracting the device to hold the cable away from the sides of the hole, characterised in that the insertion tube (1) is vertically mounted; and the second tube (2) is an auxiliary tube mounted entirely on the wall of the insertion tube to provide access to the pipe via the insertion tube, the axis of the auxiliary tube being in line, in use, with the hole in the pipe wall.

2. Apparatus as claimed in claim 1, wherein the auxiliary tube and the insertion tube are configured to gain access to the pipe bore via common closure means (3).

3. Apparatus as claimed in claim 2, wherein the common closure means comprises a plate valve (3) mounted in use above the hole, the insertion tube being mounted apon the plate valve.

4. Apparatus as claimed in claim 1, 2 or 3 wherein a first fluid tight seal (15) is provided in the auxiliary tube to effect sealing between the rod and the auxiliary tube, and a second fluid tight seal (10) is provided in the insertion tube to effect sealing between the cable and the insertion tube.

5. Apparatus as claimed in any one of claims 1 to 3, wherein the insertion tube comprises a first elongate portion (1) terminating at respective ends in first and second flanges (7,8), a second flanged portion being attached to the first portion and having a plate valve (3) therein, the auxiliary tube (2) being attached to the first portion of the insertion tube.

6. A method for introducing and removing a device from a pipe using the apparatus of claim 1, the method comprising introducing the device vertically through the insertion tube into the pipe bore, moving the device along the pipe bore to a desired position, withdrawing the device from the pipe bore and utilising the guide rod to hold the cable away from the sides of the hole.

## Patentansprüche

1. Vorrichtung zum Einbringen und Entnehmen einer Einrichtung (25) in eine bzw. aus einer Rohrleitung, wobei die Einrichtung mittels eines Seiles (11) vor- bzw. zurückbewegt wird, mit einem Einführungsrohr (1), von dem ein Ende über einem in die Rohrleitungswand gebohrten Loch (23) angebracht ist, mit einem zweiten Rohr (2), das an der Wand des Einführungsrohres befestigt ist, und mit einem Stab (6), von dem ein Ende durch das zweite Rohr hindurch in die Rohrleitungsbohrung einführbar ist, wobei das Stabende Mittel (28) aufweist, die am Seil angreifen, wenn es die Einrichtung zurückzieht, um das Seil von den Seiten des Loches fernzuhalten, dadurch gekennzeichnet, daß das Einführungsrohr (1) vertikal angeordnet ist und das zweite Rohr (2) ein Hilfsrohr ist, das ganz an der Wand des Einführungsrohres befestigt ist, um einen Zugang zur Rohrleitung über das Einführungsrohr vorzusehen, wobei die Achse des Hilfsrohres bei Gebrauch mit dem Loch in der Rohrleitungswand fluchtet.

2. Vorrichtung nach Anspruch 1, bei der das Hilfsrohr und das Einführungsrohr so ausgebildet sind, daß sie Zugang zur Rohrleitungsbohrung über eine gemeinsame Verschlußeinrichtung (3) gewähren.

3. Vorrichtung nach Anspruch 2, bei der die gemeinsame Verschlußeinrichtung ein Plattenventil (3) ist, das bei Gebrauch über dem Loch angebracht ist, wobei das Einführungsrohr über dem Plattenventil angebracht ist.

4. Vorrichtung nach Anspruch 1, 2 oder 3, bei der eine erste strömungsmitteldichte Abdichtung (15) im Hilfsrohr vorgesehen ist, um zwischen dem Stab und dem Hilfsrohr eine Dichtung vorzusehen, und bei der eine zweite strömungsmitteldichte Abdichtung (10) im Einführungsrohr vorgesehen ist, um zwischen dem Seil und dem Einführungsrohr eine Dichtung vorzusehen.

5. Vorrichtung nach einem der Ansprüche 1 bis 3, bei der das Einführungsrohr ein erstes langgestrecktes Teilstück (1) aufweist, das an entsprechenden Enden in ersten und zweiten Flanschen (7, 8) endet, wobei ein zweites geflanschtes Teilstück am ersten Teilstück befestigt ist und das Plattenventil (3) aufnimmt, wobei das Hilfsrohr (2) am ersten Teilstück des Einführungsrohres befestigt ist.

6. Verfahren zum Einbringen und Entnehmen einer Einrichtung in eine bzw. aus einer Rohrleitung unter Verwendung der Vorrichtung nach Anspruch 1, wobei die Einrichtung vertikal durch das Einführungsrohr hindurch in die Rohrleitungsbohrung eingeführt wird, entlang der Rohrleitungsbohrung an eine gewünschte Stelle bewegt wird und aus der Rohrleitungsbohrung herausgezogen wird unter Verwendung des Führungsstabes, um das Seil von den Seiten des Loches fernzuhalten.

## Revendications

1. Equipement pour introduire dans un tuyau et en retirer un dispositif (25) qui est avancé et ramené en arrière par un câble (11), l'équipement comprenant un tube d'introduction (1) ayant une extrémité destinée à être montée au-dessus d'un trou (23) foré dans la paroi du tuyau, un deuxième tube (2) fixé à la paroi du tube d'introduction et une tige (6) ayant une extrémité qui peut être introduite par le deuxième tube dans le trou du tuyau, l'extrémité de la tige ayant un moyen (28) pour se placer contre le câble lorsqu'il est en train de ramener le dispositif vers l'arrière afin de tenir le câble à distance des côtés du trou, caractérisé en ce que le tube d'introduction (1) est monté verticalement ; et le deuxième tube (2) est un tube auxiliaire monté entièrement sur la paroi du tube d'introduction pour donner accès au tuyau par le tube d'introduction, l'axe du tube auxiliaire étant, en service, à l'alignement du trou de la paroi du tuyau.

2. Equipement selon la revendication 1, dans lequel le tube auxiliaire et le tube d'introduction sont configurés pour donner accès au trou du tuyau par l'intermédiaire d'un moyen commun de fermeture (3).

3. Equipement selon la revendication 2, dans lequel le moyen commun de fermeture consiste en une vanne à guillotine (3) montée en service au-dessus du trou, le tube d'introduction étant monté sur la vanne à guillotine.

4. Equipement selon la revendication 1, 2 ou 3, dans lequel un premier joint d'étanchéité aux fluides (15) est placé dans le tube auxiliaire pour assurer l'étanchéité entre la tige et le tube auxiliaire et un deuxième joint d'étanchéité aux fluides (10) est placé dans le tube d'introduction pour assurer l'étanchéité entre le câble et le tube d'introduction.

5. Equipement selon l'une quelconque des revendications 1 à 3, dans lequel le tube d'introduction comprend une première partie allongée (1) aboutissant aux extrémités respectives à une première et une deuxième bride (7, 8), une deuxième partie équipée d'une bride étant fixée à la première partie et comportant intérieurement une vanne à guillotine (3), le tube auxiliaire (2) étant fixé à la première partie du tube d'introduction.

6. Procédé pour introduire dans un tuyau et en retirer un dispositif à l'aide de l'équipement selon la revendication 1, le procédé comprenant l'introduction du dispositif verticalement par le tube d'introduction dans l'alésage du tuyau, le déplacement du dispositif le long de l'alésage du tuyau pour le mettre à une position voulue, le retrait du dispositif de l'alésage du tuyau et l'utilisation de la tige de guidage pour tenir le câble à distance des cotés du trou.
